(19) Europäisches Patentamt
European Patent Office
Office européen des brevets

(11) **EP 4 568 493 B1**

(12) **EUROPEAN PATENT SPECIFICATION**

(45) Date of publication and mention
of the grant of the patent:
**18.03.2026 Bulletin 2026/12**

(21) Application number: **23744774.3**

(22) Date of filing: **20.07.2023**

(51) International Patent Classification (IPC):
*A23G 9/32* *(2006.01)*     *A23G 9/34* *(2006.01)*
*A23G 9/38* *(2006.01)*     *A23G 9/42* *(2006.01)*
*A23L 33/185* *(2016.01)*

(52) Cooperative Patent Classification (CPC):
**A23G 9/38; A23G 9/32; A23G 9/34; A23G 9/42**

(86) International application number:
**PCT/EP2023/070168**

(87) International publication number:
**WO 2024/033046 (15.02.2024 Gazette 2024/07)**

(54) **PLANT-BASED FROZEN CONFECTION**

GEFRORENES KONFEKT AUF PFLANZLICHER BASIS

CONFISERIE GLACÉE À BASE DE PLANTES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **12.08.2022 EP 22190204**

(43) Date of publication of application:
**18.06.2025 Bulletin 2025/25**

(73) Proprietor: **MAGNUM IP HOLDINGS B.V.
1017 BM Amsterdam (NL)**

(72) Inventors:
• **ROSSETTI, Damiano**
**6708 WH Wageningen (NL)**
• **TELFORD, Julia, Helen**
**6708 WH Wageningen (NL)**

(74) Representative: **Potter Clarkson
Chapel Quarter
Mount Street
Nottingham NG1 6HQ (GB)**

(56) References cited:
FR-A1- 2 085 528     IT-A1- 201900 001 763
US-A1- 2020 029 613     US-A1- 2020 178 556

## Description

### Field of the invention

The invention relates to plant-based frozen confections, in particular to the use of specific blends of plant-based proteins in plant-based frozen confections.

### Background of the invention

Plant-based foods are a growing consumer trend, which is thought to be driven by increasing health and environmental consciousness. As a result, there is currently an increased consumer demand for frozen confections which are not based on dairy ingredients, and instead use plant-based alternatives.

Frozen confections where some or all of the dairy ingredients have been replaced with plant-based ingredients are commercially available. For instance, pulse protein (such as soy protein or pea protein) is becoming more widely used in frozen confections. However, the flavour and texture of frozen confections formulated with certain pulse proteins is still unappealing to some consumers. In particular, their widespread acceptance is hindered by issues around their taste, since pulse proteins tend to have an inherent taste that formulators must mask in order to create a neutral product base. In addition, consumers want frozen confections that are dairy-free, but with the creamy mouthfeel and texture of regular ice cream.

The molecular structures of plant proteins are very different from those of dairy proteins, and a number of technical challenges may occur when formulating plant-based frozen confections. One such challenge is maintaining a suitable mix viscosity over time, since the difference in protein structures tends to mean that the viscosity is higher in plant-based premixes than in dairy premixes - especially after ageing of the premixes. Another challenge relates to texture and mouthfeel, since milk proteins stabilise the partial coalescence of the fat phase and maintain small air bubbles in frozen confections.

US 2020/178556 A1 and US 2020/029613 A1 disclose frozen confectionery products comprising vegetable proteins.

Therefore, there remains a need for improved formulations for plant-based frozen confections which overcome one or more of the drawbacks associated with the current formulations.

### Summary of the invention

The inventors have found that improved plant-based frozen confections can be provided by using carob protein in addition to soy protein and/or pea protein. Thus, the present invention is directed to a plant-based frozen confection comprising fat in an amount of 1 to 15 wt%; sugars in an amount of 10 to 30 wt%; and plant protein in an amount of 0.4 to 10 wt%, wherein the plant protein comprises a first plant protein (P1) and a second plant protein (P2) in a weight ratio $(P1 : P2)$ of 4:1 to 1:1, and wherein the first plant protein (P1) is soy protein and/or pea protein and the second plant protein (P2) is carob protein.

### Detailed description of the invention

The present invention relates to a plant-based frozen confection. As used herein the term frozen confection means a confection intended for consumption in the frozen state (i.e. where the temperature of the confection is less than 0°C, and preferably where the confection comprises significant amounts of ice). Definitions of various terms and techniques used in frozen confection manufacture are found in Ice Cream by H. Douglas Goff and Richard W. Hartel (2013, 7th Edition, ISBN 978-1-4614-6096-1).

As used herein the term plant-based means that the frozen confection is formulated primarily from plant-derived ingredients. Nevertheless, it will be appreciated that the plant-based frozen confection may be fortified with vitamins and/or minerals or flavoured with ingredients (such as honey) which are not strictly speaking derived from plants. Preferably at least 98% by dry weight of the ingredients are derived from plants, more preferably at least 99%, at least 99.5%, at least 99.9%, most preferably 100% by dry weight of the ingredients are derived from plants. In particular, it is preferred that the frozen confection is essentially free of animal-derived ingredients, and thus comprises animal-derived ingredients in an amount of less than 0.1 wt%, preferably less than 0.05 wt%, more preferably less than 0.01 wt%.

The frozen confection comprises plant protein in an amount of 0.4 to 10 wt%. Since high levels of plant protein are associated with undesirable mouthfeel characteristics (such as grittiness) and/or flavour off-notes, it is preferred that the frozen confection comprises the plant protein in an amount of 8 wt% or less, 6 wt% or less, 5 wt% or less, or even 4 wt% or less. The frozen confection preferably comprises the plant protein in an amount of at least 0.45 wt%, at least 0.5 wt%, at least 0.55 wt%, or even at least 0.6 wt%. Most preferably, the frozen confection comprises the plant protein in an amount of 0.6 wt% to 2.5 wt%, or even 0.6 wt% to 2 wt%.

The plant protein comprises a first plant protein (**P1**) and a second plant protein (**P2**) in a weight ratio (**P1 : P2**) of 4:1 to 1:1. The first plant protein (**P1**) is soy protein and/or pea protein and the second plant protein (**P2**) is carob protein. In other words, the plant protein may comprise soy protein and carob protein, or pea protein and carob protein, or soy protein and pea protein and carob protein. As such, both the first and second plant proteins are pulse proteins.

The combination of the first and second plant proteins has advantages over the use of either protein alone. In particular, such a combination is thought to produce a frozen confection having a good microstructure and acceptable organoleptic properties, whilst maintaining a suitable mix viscosity to allow for factory production.

The weight ratio of the first plant protein to the second plant protein (**P1 : P2**) is 4:1 to 1:1. As such, the frozen confection usually comprises more of the first plant protein (**P1**) than the second plant protein (**P2**), and never comprises more of the second plant protein (**P2**) than the first plant protein (P1). Preferably the weight ratio of the first plant protein to the second plant protein (**P1 : P2**) is 3.5:1 to 1:1, 3:1 to 1:1, 4:1 to 1.2:1, 3.5:1 to 1.2:1, 3:1 to 1.2:1, 4:1 to 1.5:1, 3.5:1 to 1.5:1, or even 3:1 to 1.5:1.

The frozen confection preferably comprises the first plant protein in an amount of at least 0.3 wt%, at least 0.4 wt%, at least 0.5 wt%, or even at least 0.6 wt%. High levels of the first protein (i.e. soy protein and/or pea protein) are best avoided since they are associated with undesirable flavour notes. Thus the frozen confection preferably comprises the first plant protein in an amount of no more than 5 wt%, no more than 3 wt%, no more than 2 wt%, or even no more than 1.5 wt%.

The addition of carob protein to frozen confections comprising soy and/or pea protein can result in the frozen confections being perceived as being more indulgent. The frozen confection preferably comprises the second plant protein (i.e. carob protein) in an amount of at least 0.15 wt%, at least 0.2 wt%, at least 0.25 wt%, or even at least 0.3 wt%. The frozen confection preferably comprises the second plant protein (i.e. carob protein) is an amount of no more than 2 wt%, no more than 1.5 wt%, no more than 1 wt%, or even no more than 0.5 wt%.

Since the frozen confection is a plant-based frozen confection, it is preferred that the frozen confection is substantially free of dairy ingredients including milk protein. As used herein "substantially free of" means that the frozen confection comprises the ingredient in question in an amount of less than 0.1 wt%, preferably less than 0.05 wt%, more preferably less than 0.01 wt%.

The frozen confection comprises fat in an amount of 1 wt% to 15 wt%, and preferably in an amount of from 2 wt% to 12 wt%, 3 wt% to 10 wt%, or even from 4 wt% to 8 wt%. The fat is preferably vegetable fat (such as coconut oil, palm oil, palm kernel oil, or a mixture thereof), and it is particularly preferred that the fat is coconut oil.

The frozen confection comprises sugars in an amount of 10 wt% to 30 wt%. Sugars are used in almost all types of frozen confection and have two major functions: delivering sweetness and controlling the amount of ice. As used herein the term "sugars" includes monosaccharides, disaccharides and oligosaccharides (which are formed from 3 to 10 monosaccharide units). Monosaccharides include glucose, fructose, galactose and mannose. Disaccharides include sucrose, lactose and trehalose. Oligosaccharides include raffinose. The term "sugars" does not include polysaccharides, which comprise >10 monosaccharides. Some ingredients commonly included in frozen confections may contribute to the amount of sugars. An example is corn syrup (sometimes called glucose syrup) - which is a mixture of monosaccharides, disaccharides and oligosaccharides.

High concentrations of sugars may contribute unwanted sweetness and or calories to the frozen confection. Therefore, the amount of sugars in the frozen confection is no more than 30 wt%, preferably no more than 28 wt%, no more than 25 wt%, or no more than 22 wt%. Conversely, low concentrations of sugars may be inappropriate if the frozen confection is a scoopable product, since a low concentration of sugars tend to result in frozen confections with a high ice content. Therefore, the amount of sugars in the frozen confection is at least 10 wt%, preferably at least 12 wt%, at least 15 wt%, or at least 20 wt%.

The frozen confection may additionally comprise nut solids, preferably in an amount of 1 wt% to 8 wt%, 1.5 wt% to 5 wt%, or even 2 wt% to 4 wt%. Preferred sources of nut solids include almonds, cashews, coconuts, pecans, macadamia nuts, brazil nuts, hazelnuts, pistachios, and mixtures thereof. Almond or coconut solids are preferred. Where present, the nut solids are preferably added in the form of nut paste or nut butter.

The frozen confection preferably comprises an emulsifier or a mixture of emulsifiers such as mono-diglycerides and the like). For example, the frozen confection may comprise emulsifier in an amount of 0.05 wt% to 1 wt%, 0.1 wt% to 0.8 wt%, or 0.2 wt% to 0.5 wt%.

Although not essential, the frozen confection typically comprises at least one stabilizer, which is preferably selected from the group consisting of locust bean gum, xanthan gum, guar gum, carrageenan, tara gum, and mixtures thereof (for example, a mixture of locust bean gum and guar gum). The amount of stabilizer in the frozen confection is preferably 0.05 wt% to 1 wt%, 0.1 wt% to 0.8 wt%, or 0.2 wt% to 0.5 wt%.

The frozen confection may optionally comprise non-nutritive sweetener, such as aspartame, acesulfame K, erythritol, sucralose, or one or more steviol glycosides such as rebaudioside A. Mixtures of two or more non-nutritive sweeteners may also be used.

The frozen confection may optionally comprise colours and/or flavours.

The frozen confection is preferably aerated. As used herein the term "aerated" means that the confection has an overrun of at least 30%. Preferably the frozen confection has an overrun of 50% to 150%, 70% to 140%, or even 80% to 120%. Overrun (with unit "%") is defined by the following equation:

$$overrun = \frac{\text{volume of aerated product - volume of initial mix}}{\text{Volume of initial mix}} \times 100\%$$

Overrun is measured at ambient temperature (20°C) and atmospheric pressure.

The frozen confection may optionally comprise further components, which include but are not limited to: inclusions, sauces, and/or toppings.

The frozen confections of the present invention can be manufactured by any suitable method. The frozen confection is typically made by freezing a premix (preferably a pasteurised premix) of ingredients such as water, fat, freezing point depressant, plant protein (comprising the soy protein and/or pea protein and carob protein), and optionally other ingredients such as emulsifiers, stabilizers, colours and flavours. Further components (where present) are usually added after the premix has been frozen.

Numerical ranges expressed in the format "from x to y" are understood to include x and y, and in specifying any range of values or amounts, any particular upper value or amount can be associated with any particular lower value or amount. Unless otherwise specified, wt% refers to weight percent based on the weight of the entire formulation (including water).

Except in the examples and comparative experiments, or where otherwise explicitly indicated, all numbers are to be understood as modified by the word "about". As used herein, the indefinite article "a" or "an" and its corresponding definite article "the" means at least one, or one or more, unless specified otherwise.

## Examples

The examples are intended to illustrate the invention and are not intended to limit the invention to those examples per se.

Example 1

Plant-based frozen confection formulations were made according to the formulations in Table 1. Sample A contained pea protein, and Samples 1 to 3 contained a combination of pea protein and carob protein. The specified first protein level (P1) is the amount of protein provided by the pea protein source (83% protein content), and the specified second protein level (P2) is the amount of protein provided by the carob protein source (54% protein content).

Table 1: plant-based frozen confection formulations

| Ingredient (wt%) | Sample | | | |
|---|---|---|---|---|
| | A | 1 | 2 | 3 |
| Coconut oil | 8 | 7 | 8 | 8 |
| Pea protein source | 1.2 | 0.53 | 0.63 | 0.88 |
| Carob protein source | - | 0.33 | 0.93 | 0.56 |
| Sucrose | 14 | 14 | 14 | 14 |
| Corn syrups (DE28, DE63) | 15 | 15 | 15 | 15 |
| Emulsifier | 0.075 | 0.1 | 0.075 | 0.075 |
| LBG | 0.15 | 0.15 | 0.15 | 0.15 |
| Guar gum | 0.15 | 0.15 | 0.15 | 0.15 |
| Colours/flavours | 0.37 | 0.3 | 0.37 | 0.37 |
| Water | to 100 | to 100 | to 100 | to 100 |
| Pea protein (P1) | 1 | 0.44 | 0.5 | 0.73 |
| Carob protein (P2) | | 0.18 | 0.5 | 0.3 |
| P1 : P2 | | 2.4 :1 | 1 : 1 | 2.4 :1 |

Briefly, the ingredients (excluding coconut oil) were combined and mixed with heating (60°C to 75°C), followed by addition of the coconut oil and further mixing. The mixes were pasteurised and homogenised, and then aged for 24 hours at 4°C.

After the ageing step, the mixes were aerated in a scraped surface heat exchanger (standard ice cream freezer). The air input was controlled to give a target overrun of 100%, and freezing was controlled to give a target extrusion temperature of -6°C.

A panel of tasters assessed the sensory properties of the frozen confections. All members of the taste panel indicated that the sensory properties of Sample 2 were either superior to or at parity with Sample A, and the majority of members of the taste panel indicated that the sensory properties of both Sample 1 and Sample 3 were either superior to or at parity with Sample A. In addition, Sample 1 was perceived to be more indulgent and to have less off-notes than Sample A.

Thus, the samples with a combination of pea protein and carob protein have improved sensory properties compared to the sample with pea protein alone.

Example 2

Plant-based frozen confection formulations were made according to the formulations in Table 2. Sample B contained soy protein, and Samples 4 and 5 contained a combination of soy protein and carob protein. The specified first protein level (*P1*) is the amount of protein provided by the soy protein source (90% protein content), and the specified second protein level (*P2*) is the amount of protein provided by the carob protein source (54% protein content).

Table 2: plant-based frozen confection formulations

| Ingredient (wt%) | Sample | | |
|---|---|---|---|
| | B | 4 | 5 |
| Coconut oil | 8 | 8 | 8 |
| Soy protein source | 1.1 | 0.78 | 0.56 |
| Carob protein source | - | 0.56 | 0.93 |
| Sucrose | 14 | 14 | 14 |
| Corn syrups (DE28, DE63) | 15 | 15 | 15 |
| Emulsifier | 0.075 | 0.075 | 0.075 |
| Stabilizer (E410, E412) | 0.3 | 0.3 | 0.3 |
| Colours/flavours | 0.37 | 0.37 | 0.37 |
| Water | to 100 | to 100 | to 100 |
| Soy protein (*P1*) | 1 | 0.7 | 0.5 |
| Carob protein (*P2*) | | 0.3 | 0.5 |
| *P1 : P2* | | 2.3 :1 | 1 : 1 |

Briefly, the ingredients (excluding coconut oil) were combined and mixed with heating (60°C to 75°C), followed by addition of the coconut oil and further mixing. The mixes were pasteurised and homogenised, and then aged for 24 hours at 4°C.

After the ageing step, the mixes were aerated in a scraped surface heat exchanger (standard ice cream freezer). The air input was controlled to give a target overrun of 100%, and freezing was controlled to give a target extrusion temperature of -6°C.

A panel of tasters assessed the sensory properties of the frozen confections. All members of the taste panel indicated that the sensory properties of Sample 5 were either superior or at parity with Sample B, and the majority of members of the taste panel indicated that the sensory properties of Sample 4 were either superior or at parity with Sample B.

Thus, the samples with a combination of soy protein and carob protein have improved sensory properties compared to the sample with soy protein alone.

A further frozen confection (Sample 6) comprising 0.48 wt% pea protein and 0.32 wt% carob protein was prepared in a similar manner (Sample 4; *P1 : P2* = 1.5:1). A panel of tasters assessed the frozen confection, which was judged to have acceptable sensory properties by all members of the taste panel. In particular, Sample 6 was judged to have significantly less of the off-flavours typically associated with plant proteins than a control sample (0.8 wt% pea protein).

## Claims

1. Plant-based frozen confection comprising fat in an amount of 1 to 15 wt%; sugars in an amount of 10 to 30 wt%; and plant protein in an amount of 0.4 to 10 wt%, wherein the plant protein comprises a first plant protein (*P1*) and a second plant protein (*P2*) in a weight ratio (*P1 : P2*) of 4:1 to 1:1, and wherein the first plant protein (*P1*) is soy protein and/or pea protein and the second plant protein (*P2*) is carob protein.

2. Plant-based frozen confection as claimed in claim 1, wherein the plant protein comprises the first plant protein (*P1*) and the second plant protein (*P2*) in a weight ratio (*P1 : P2*) of 3:1 to 1:1.

3. Plant-based frozen confection as claimed in claim 2, wherein the plant protein comprises the first plant protein (*P1*) and the second plant protein (*P2*) in a weight ratio (*P1* : *P2*) of 3:1 to 1.5:1.

4. Plant-based frozen confection as claimed in any one of claims 1 to 3, wherein the frozen confection has an overrun of 50% to 150%.

5. Plant-based frozen confection as claimed in any one of claims 1 to 4, wherein the frozen confection comprises plant protein in an amount of 0.5 to 6 wt%.

6. Plant-based frozen confection as claimed in any one of claims 1 to 5, wherein the frozen confection comprises sugars in an amount of 15 to 25 wt%.

7. Plant-based frozen confection as claimed in any one of claims 1 to 6, wherein the frozen confection comprises fat in an amount of 3 to 10 wt%.

8. Plant-based frozen confection as claimed in any one of claims 1 to 7, wherein the frozen confection comprises the first plant protein (*P1*) in an amount of 0.3 to 5 wt%.

9. Plant-based frozen confection as claimed in any one of claims 1 to 8, wherein the frozen confection comprises the second plant protein (*P2*) in an amount of 0.15 to 2 wt%.

## Patentansprüche

1. Gefrorene Tiefkühlsüßspeise auf pflanzlicher Basis, die Fett in einer Menge von 1 bis 15 Gew.-%, Zucker in einer Menge von 10 bis 30 Gew.-% und Pflanzenprotein in einer Menge von 0,4 bis 10 Gew.-% umfasst, wobei das Pflanzenprotein ein erstes Pflanzenprotein (*P1*) und ein zweites Pflanzenprotein (*P2*) in einem Gewichtsverhältnis (*P1:P2*) von 4:1 bis 1:1 umfasst und wobei das erste Pflanzenprotein (*P1*) Sojaprotein und/oder Erbsenprotein ist und das zweite Pflanzenprotein (*P2*) Johannisbrotprotein ist.

2. Tiefkühlsüßspeise auf pflanzlicher Basis nach Anspruch 1, wobei das Pflanzenprotein das erste Pflanzenprotein (*P1*) und das zweite Pflanzenprotein (*P2*) in einem Gewichtsverhältnis (*P1:P2*) von 3:1 bis 1:1 umfasst.

3. Tiefkühlsüßspeise auf pflanzlicher Basis nach Anspruch 2, wobei das Pflanzenprotein das erste Pflanzenprotein (*P1*) und das zweite Pflanzenprotein (*P2*) in einem Gewichtsverhältnis (*P1:P2*) von 3:1 bis 1,5:1 umfasst.

4. Tiefkühlsüßspeise auf pflanzlicher Basis nach einem der Ansprüche 1 bis 3, wobei die Tiefkühlsüßspeise eine Überschreitung von 50 % bis 150 % aufweist.

5. Tiefkühlsüßspeise auf pflanzlicher Basis nach einem der Ansprüche 1 bis 4, wobei die Tiefkühlsüßspeise pflanzliches Protein in einer Menge von 0,5 bis 6 Gew.-% umfasst.

6. Tiefkühlsüßspeise auf pflanzlicher Basis nach einem der Ansprüche 1 bis 5, wobei die Tiefkühlsüßspeise Zucker in einer Menge von 15 bis 25 Gew.-% umfasst.

**7.** Tiefkühlsüßspeise auf pflanzlicher Basis nach einem der Ansprüche 1 bis 6, wobei die Tiefkühlsüßspeise Fett in einer Menge von 3 bis 10 Gew.-% umfasst.

**8.** Tiefkühlsüßspeise auf pflanzlicher Basis nach einem der Ansprüche 1 bis 7, wobei die Tiefkühlsüßspeise das erste Pflanzenprotein (*P1*) in einer Menge von 0,3 bis 5 Gew.-% umfasst.

**9.** Tiefkühlsüßspeise auf pflanzlicher Basis nach einem der Ansprüche 1 bis 8, wobei die Tiefkühlsüßspeise das zweite Pflanzenprotein (*P2*) in einer Menge von 0,15 bis 2 Gew.-% umfasst.

**Revendications**

**1.** Confiserie glacée à base de plantes comprenant de la matière grasse en une quantité de 1 à 15 % en poids ; des sucres en une quantité de 10 à 30 % en poids ; et des protéines végétales en une quantité de 0,4 à 10 % en poids, dans laquelle la protéine végétale comprend une première protéine végétale (*P1*) et une seconde protéine végétale (*P2*) dans un rapport pondéral (*P1:P2*) de 4:1 à 1:1, et dans laquelle la première protéine végétale (*P1*) est une protéine de soja et/ou une protéine de pois et la seconde protéine végétale (*P2*) est une protéine de caroube.

**2.** Confiserie glacée à base de plantes selon la revendication 1, dans laquelle la protéine végétale comprend la première protéine végétale (*P1*) et la seconde protéine végétale (*P2*) dans un rapport pondéral (**P1:P2**) de 3:1 à 1:1.

**3.** Confiserie glacée à base de plantes selon la revendication 2, dans laquelle la protéine végétale comprend la première protéine végétale (*P1*) et la seconde protéine végétale (*P2*) dans un rapport pondéral (*P1:P2*) de 3:1 à 1,5:1.

**4.** Confiserie glacée à base de plantes selon l'une quelconque des revendications 1 à 3, dans laquelle la confiserie glacée présente un foisonnement de 50 % à 150 %.

**5.** Confiserie glacée à base de plantes selon l'une quelconque des revendications 1 à 4, dans laquelle la confiserie glacée comprend des protéines végétales en une quantité de 0,5 à 6 % en poids.

**6.** Confiserie glacée à base de plantes selon l'une quelconque des revendications 1 à 5, dans laquelle la confiserie glacée comprend des sucres en une quantité de 15 à 25 % en poids.

**7.** Confiserie glacée à base de plantes selon l'une quelconque des revendications 1 à 6, dans laquelle la confiserie glacée comprend de la matière grasse en une quantité de 3 à 10 % en poids.

**8.** Confiserie glacée à base de plantes selon l'une quelconque des revendications 1 à 7, dans laquelle la confiserie glacée comprend la première protéine végétale (*P1*) en une quantité de 0,3 à 5 % en poids.

**9.** Confiserie glacée à base de plantes selon l'une quelconque des revendications 1 à 8, dans laquelle la confiserie glacée comprend la seconde protéine végétale (*P2*) en une quantité de 0,15 à 2 % en poids.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020178556 A1

- US 2020029613 A1

**Non-patent literature cited in the description**

- **H. DOUGLAS GOFF** ; **RICHARD W. HARTEL**. Ice Cream. 2013